# EUROPÄISCHE PATENTANMELDUNG

(11) **EP 2 208 411 A1**
(43) Veröffentlichungstag der Anmeldung: **21.07.2010**
(21) Anmeldenummer: 10000261.7
(22) Anmeldetag: 13.01.2010
(51) Int. Cl.: A01D 90/02, A01D 90/04, A01D 90/10

(54) **Landwirtschaftliches Transportfahrzeug zur Aufnahme von am Boden liegendem Erntegut**

(30) Priorität: 19.01.2009 DE 102009005391
(71) Anmelder: CLAAS Saulgau GmbH, 88348 Bad Saulgau (DE)
(72) Erfinder: Sauter, Stefan, 88529 Zwiefalten (DE)

(57) **Zusammenfassung**

Landwirtschaftliches Transportfahrzeug mit einer Kupplungseinrichtung zum Anschluss an ein Zugfahrzeug und zur Aufnahme von am Boden liegenden Erntegut mit wenigstens einem Förderaggregat zur Aufnahme von am Boden liegenden Erntegut und weiter stromaufwärts nachfolgenden Kratzboden, wobei das Transportfahrzeug (19) wenigstens eine auswechselbare Einrichtung (10 oder 19) als Fördereinrichtung (11,20) aufweist, welche mittels einer Schnellwechselvorrichtung mit dem Transportfahrzeug (1) koppel- oder entkoppelbar ist.

## Beschreibung

Die Erfindung betrifft ein landwirtschaftliches Transportfahrzeug zur Aufnahme von am Boden liegenden Erntegut gemäß dem Oberbegriff des Anspruchs 1.

### Stand der Technik

Bekannt sind landwirtschaftliche Transportfahrzeuge als Ladewagen zur Aufnahme von am Boden liegenden Erntegut für den landwirtschaftlichen Feldeinsatz. Die Aufnahme des Ernteguts erfolgt in bekannter Weise über eine Pick up. Ladewagen dieser Art sind zudem mit einem Schneidaggregat zur Zerkleinerung des Ernteguts ausgestattet. Das Schneidaggregat besteht aus feststehenden Messern, die als Schneidkamm nebeneinander angeordnet sind und das Erntegut wird von einem der Pick up stromaufwärts folgenden Rotor erfasst und durch den Schneidkamm hindurch gepresst, wodurch das Erntegut zerkleinert wird. Rotor und Messerkamm bilden gemeinsam den sogenannten Schneidrotor.

Der Markt fordert ständig größere Transportfahrzeuge zum Abtransport von auf dem Feld geerntetem Erntegut und insbesondere Ladewagen mit größerer Ladekapazität, so dass daran gekoppelt größere Achslasten entstehen, die vorzugsweise als Tandemachse ausgebildet sind. Da diese Transportfahrzeuge an größere Investitionen gebunden sind, ist es eine Aufgabe der Erfindung, die Wirtschaftlichkeit dieser Transportfahrzeuge zu verbessern.

### Aufgabenstellung

Hier setzt die Aufgabe der Erfindung an mit dem Ziel, Ladewagen mit größerer Ladekapazität zu schaffen, deren Wirtschaftlichkeit verbessert wird.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Zur erfindungsgemäßen Gattung der landwirtschaftlichen Transportfahrzeuge zählen die Ladewagen, die mit einer Fördereinrichtung zur Aufnahme des am Boden liegenden Ernteguts ausgestattet sind. Diese Fördereinrichtung umfasst eine Pick up, einen Schneidrotor, eine Schneideinrichtung, vorzugsweise bestehend aus feststehenden Messern und Abstreifern.. Das Erntegut wird somit vom Boden aufgenommen, zerkleinert in den Innenraum des Ladewagens gefördert und dort von einem Kratzboden aufgenommen und weiter nach hinten in den Laderaum gefördert. Die Rückwand des Ladewagens lässt sich öffnen und somit kann das aufgenommene Erntegut beispielsweise in einem Fahrsilo mittels Unterstützung des angetriebenen Kratzbodens aus dem Laderaum entladen bzw. kann auf dem Fahrsilo verteilt werden. Des Weiteren kann der Entladevorgang durch ein weiteres Förderaggregat, ausgebildet als Verteilereinrichtung und insbesondere als Walzenstreueinrichtung - sofern diese an dem Ladewagen vorhanden ist - unterstützt werden. Letzteres hat die Funktion des gleichmäßigen Verteilens des Ernteguts auf dem Fahrsilo.

Das Gewicht derartiger Fördereinrichtungen kann in Summe 3 t und mehr betragen. Erfindungsgemäß ist das gattungsbildende landwirtschaftliche Transportfahrzeug derart ausgebildet, dass dieses wenigstens eine auswechselbare Einrichtung als Förderaggregat umfasst, welche mittels einer Schnellwechselvorrichtung mit dem Grundfahrzeug koppel- oder entkoppelbar ist.

Erfindungsgemäß beinhaltet dieses den Vorteil, dass dadurch das Leergewicht des landwirtschaftlichen Transportfahrzeugs durch Abbau des wenigstens einen Förderaggregats erheblich gemindert werden kann. Dieses ist insbesondere dann von Vorteil, wenn das oder die Förderaggregate beim Feldeinsatz nicht benötigt werden, wie dieses beispielsweise beim Überladevorgang vom Feldhäcksler auf ein landwirtschaftliches Transportfahrzeug der Fall ist. Damit kann der Ladewagen gleichermaßen als gewichtsreduzierter Ladewagen eingesetzt werden, so dass dadurch seine Ladekapazität in Bezug auf sein zulässiges Gesamtgewicht vergrößert wird. Dieses erhöht seine Wirtschaftlichkeit, weil dadurch zugleich die Masse des Eigengewichts des Transportfahrzeugs erheblich dann reduziert werden kann, wenn zumindest eine der auswechselbaren Einrichtungen für den Transportzweck nicht benötigt wird.

Dabei ist es erfindungsgemäß wahlweise möglich, entweder das vordere, das hintere, oder beide, das vordere und das hintere Förderaggregat, für diesen Zweck der Gewichtsreduzierung vom Transportfahrzeug abzukoppeln. Wirtschaftlich kann dieses nur erfolgen, wenn diese Kopplungs- oder Entkopplungsvorgänge schnell und einfach innerhalb weniger Minuten durchzuführen sind. Wenige Minuten meint dabei im Zeitintervall etwa 15 Minuten und weniger.

Die Fördereinrichtung als Aufnahmeeinrichtung zum Aufnehmen von am Boden liegendem Erntegut, die Pick ab mit Schneidrotor und Schneideinrichtung, ist somit als auswechselbare Einrichtung im vorderen Bereich des Transportfahrzeugs angeordnet.

Die Fördereinrichtung als Verteilereinrichtung bzw. Walzenstreueinrichtung ist somit als auswechselbare Einrichtung im hinteren Bereich des Transportfahrzeugs angeordnet.

Zum raschen Ein- und Ausbau weist die wenigstens eine auswechselbare Einrichtung Zentriermittel zur lagegenauen Fixierung, und Schnellspannelemente als Aufnahmepunkte und Verriegelungselemente zur Verbindung mit dem Transportfahrzeug auf.

Ebenso weist die wenigstens eine auswechselbare Einrichtung Kupplungsmittel zur Ankopplung an das Antriebssystem des Zugfahrzeugs auf. Diese Kupplungsmittel können sowohl mechanische Kupplungselemente, als auch hydraulische oder elektrische Kupplungselemente zur Energieübertragung umfassen. In jedem Fall steht der Antrieb der auswechselbaren Einrichtungen mit dem Antriebsmotor des Zugfahrzeugs in Antriebsverbindung.

Die besonderen erfinderische Vorteile bestehen in der Nutzlasterhöhung des Ladewagens als landwirtschaftliches Transportfahrzeug, nunmehr als Kombiwagen zum Transportieren von landwirtschaftlichem Erntegut jeglicher Art, wobei die Vorteile des Kratzbodens zum Entladen auf dem Fahrsilo mit oder ohne die auswechselbaren Einrichtungen erhalten bleiben.

Weiterhin hat der Nutzer verfahrenstechnisch gesehen den Vorteil, die volle Variabilität hinsichtlich der Kombinatorik des Transportfahrzeugs mit den auswechselbaren Einrichtungen je nach Anforderungsart nutzen zu können, nämlich die Kombinatorik
- Transportfahrzeug mit beiden auswechselbaren Ausrüstungen nutzen zu können (d.h. mit Aufnahmeeinrichtung und Streu und Fräseinrichtung).
- Transportfahrzeug mit nur vorderer auswechselbaren Ausrüstungen nutzen zu können (d.h. nur mit Aufnahmeeinrichtung und gleichzeitigem Verzicht auf die Streu und Fräseinrichtung).
- Transportfahrzeug mit nur hinteren auswechselbaren Ausrüstungen nutzen zu können (d.h. mit Verzicht der Aufnahmeeinrichtung aber mit Streu und Fräseinrichtung).
- Transportfahrzeug mit keiner der beiden auswechselbaren Ausrüstungen nutzen zu können (d.h. Verzicht auf Aufnahmeeinrichtung und Streu und Fräseinrichtung)

Weitere Einzelheiten sind den beigefügten Figurendarstellungen zu entnehmen:

### Ausführungsbeispiel

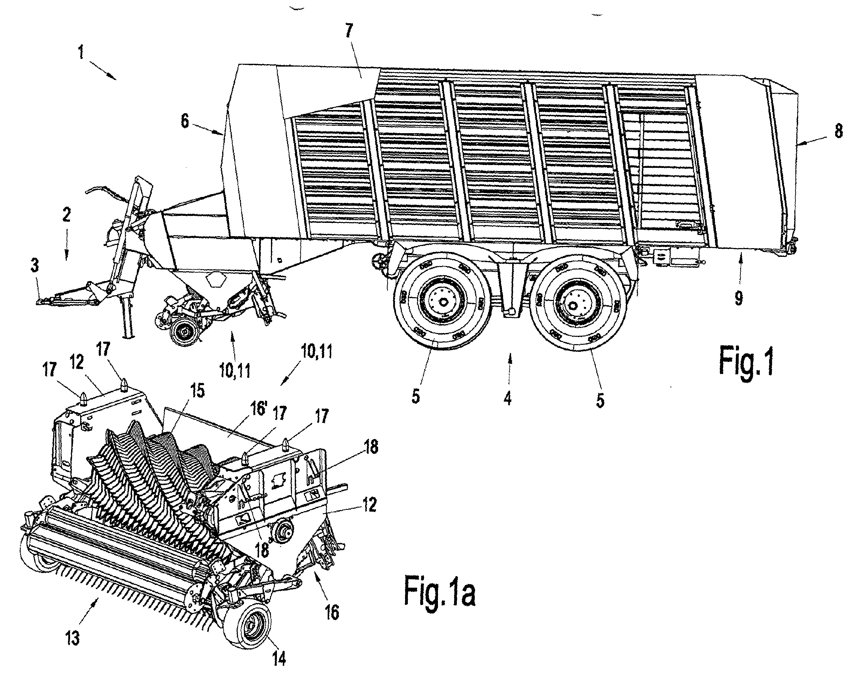

Fig. 1 zeigt ein landwirtschaftliches Transportfahrzeug 1 der erfinderischen Gattung mit einer Zug- und Kupplungseinrichtung 2,3 mit hydraulisch betätigbare Knickdeichsel, ausgebildet als Ladewagen mit Tandemachse 4, mit Laufrädern 5, im aufgerüsteten Zustand, d.h. mit einer auswechselbaren Einrichtung 10 als eingebaute Fördereinrichtung 11 mit Aufnahmeeinrichtung 13. Der Laderaum des Transportfahrzeugs 1 wird begrenzt durch die Stirnwand 6, den Seitenwänden 7, der hochklappbaren Heckklappe 8 und dem Kratzboden 9.
Fig.1a zeigt die auswechselbare Einrichtung 10 im abgekoppelten Zustand freistehend, nämlich die vorgenannte Fördereinrichtung 11 als Pick up mit Tasträdern 14, mit Förderrotor 15 und Schneideinrichtung 16 und Abstreifern 16', die in einem diesen gemeinsamen Rahmengestell 12 gelagert bzw. gehaltert sind. Da dem Fachmann die Funktionen dieser Elemente bekannt sind, kann auf die weitere Beschreibung dieser Fördereinrichtung 11 an dieser Stelle verzichtet werden.

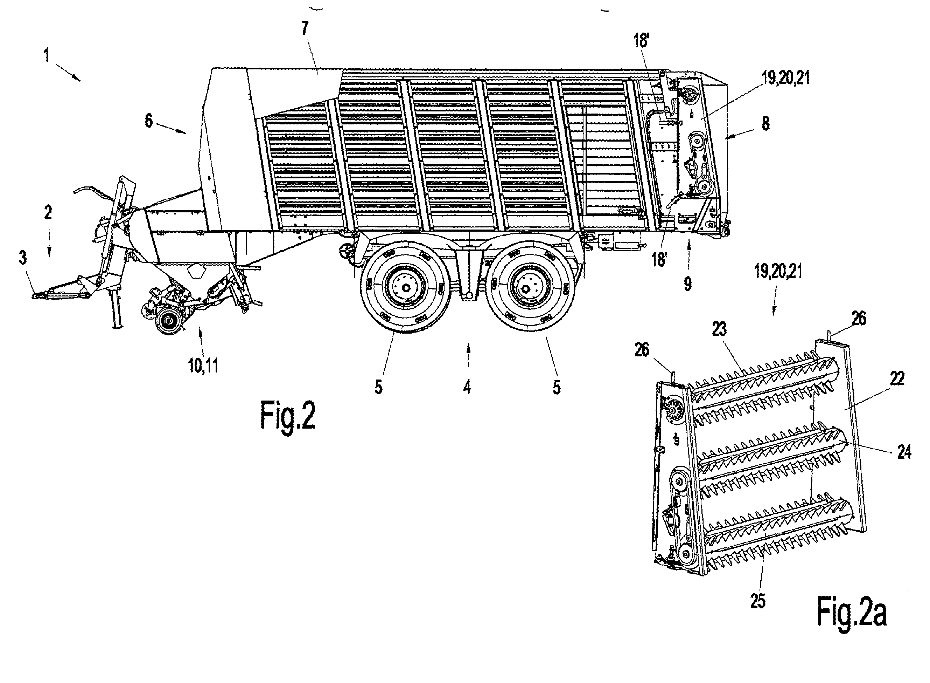

Fig. 2 zeigt das gleiche landwirtschaftliche Transportfahrzeug der erfinderischen Gattung wie unter Fig.1 beschrieben, ausgebildet als Ladewagen im aufgerüsteten Zustand mit eingebauter frontseitiger auswechselbarer Einrichtung 10 als Fördereinrichtung 11 und einer heckseitigen auswechselbaren Einrichtung 19, als Fördereinrichtung 20, ausgebildet als Streu- und Fräseinrichtung 21.
Fig.2a zeigt die auswechselbare Einrichtung 19 im abgekoppelten Zustand freistehend, nämlich die Streu- und Fräseinrichtung 21. Diese besteht im Wesentlichen aus dem Rahmengestell 22, in dem die Fräs- und Streuwalzen 23,24,25 umlaufend angetrieben gelagert sind. Da dem Fachmann auch die Funktionen dieser Elemente bekannt sind, kann auf die weitere Beschreibung eines Ladewagens mit Streu- und Fräseinrichtung 21 an dieser Stelle verzichtet werden.

Beide auswechselbaren Einrichtungen sind mit Zentrierelementen 17,26 ausgestattet, welche zugleich eine Zentrierhilfe darstellen und eine lagegenaue Positionierung innerhalb des Transportfahrzeugs 1 ermöglichen.

Mit Unterstützung der hydraulisch betätigbaren Knickdeichsel kann die vordere auswechselbare Einrichtung 10 auf eine untergeschobene Paletten oder einen untergeschobenen flachen Palettenwagenwagen abgesetzt werden. Nach dem Lösen der Spann- und Befestigungselemente kann nunmehr durch Anheben der Knickdeichsel der vordere Teil des Transportfahrzeuge soweit angehoben werden, dass die auswechselbare Einheit, hier die komplette Fördereinrichtung, seitlich, d.h. quer zur Fahrtrichtung, aus dem Bereich des Transportfahrzeuges bewegt und damit entfernt werden kann. Der Wiedereinbau erfolgt in umgekehrter Reihenfolge.

Die hintere auswechselbare Einrichtung 19 kann nach dem Lösen ihrer aus Vereinfachungsgründen der Darstellung nicht näher beschriebenen Spann- und Befestigungselemente durch die geöffneten Heckklappen mittels einer Hubeinrichtung - beispielsweise einem Gabelstapler - dem Innenraum des Transportfahrzeugs 1 entnommen werden. Die nunmehr entstehenden Öffnungen in den Seitenwänden werden mit entsprechend geformten Verschlussblechen verschlossen, wobei diese von den gleichen Aufnahmepunkten 18,18' der auswechselbaren Einrichtungen 10,19 aufgenommen werden.

Die Spannelemente können beispielsweise als handelsübliche Kniehebelspannelemente oder beispielsweise auch als hydraulisch betätigte Spannelemente ausgeführt sein.

### Bezugszeichenliste

- 1: landwirtschaftliches Transportfahrzeug
- 2: Zugeinrichtung
- 3: Kupplungseinrichtung
- 4: Tandemachse
- 5: Laufräder
- 6: Stirnwand
- 7: Seitenwand
- 8: Heckklappe
- 9: Kratzboden
- 10: auswechselbare Einrichtung
- 11: Fördereinrichtung
- 12: Rahmengestell
- 13: Aufnahmeeinrichtung (Pick up)
- 14: Tastrad
- 15: Förderrotor
- 16: Schneideinrichtung
- 16': Abstreifer
- 17: Zentrierelement
- 18,18': Aufnahmepunkte, Spann- und Befestigungselement
- 19: auswechselbare Einrichtung
- 20: Fördereinrichtung
- 21: Streu- und Fräseinrichtung
- 22: Rahmengestell
- 23: Fräs- und Streuwalze
- 24: Fräs- und Streuwalze
- 25: Fräs- und Streuwalze
- 26: Zentrierelement

## Patentansprüche

1. Landwirtschaftliches Transportfahrzeug mit einer Kupplungseinrichtung zum Anschluss an ein Zugfahrzeug und zur Aufnahme von am Boden liegenden Erntegut mit wenigstens einem Förderaggregat zur Aufnahme von am Boden liegenden Erntegut und weiter stromaufwärts nachfolgenden Kratzboden, **dadurch gekennzeichnet, dass** das Transportfahrzeug (19) wenigstens eine auswechselbare Einrichtung (10 oder 19) als Fördereinrichtung (11,20) aufweist, welche mittels einer Schnellwechselvorrichtung mit dem Transportfahrzeug (1) koppel- oder entkoppelbar ist.

2. Landwirtschaftliches Transportfahrzeug nach Anspruch 1, **dadurch gekennzeichnet, dass** die auswechselbare Einrichtung (10) im vorderen Bereich des Transportfahrzeugs (1) angeordnet ist.

3. Landwirtschaftliches Transportfahrzeug nach Anspruch 2, **dadurch gekennzeichnet, dass** die wenigstens eine auswechselbare Einrichtung (10) wenigstens eine Aufnahmevorrichtung (13) mit einem Förderrotor (15) umfasst.

4. Landwirtschaftliches Transportfahrzeug nach Anspruch 2, **dadurch gekennzeichnet, dass** die wenigstens eine auswechselbare Einrichtung (10) wenigstens eine Aufnahmevorrichtung (13) mit einem Förderrotor (15) und einer Scheideinrichtung (16) umfasst.

5. Landwirtschaftliches Transportfahrzeug nach Anspruch 2, **dadurch gekennzeichnet, dass** die wenigstens eine auswechselbare Einrichtung (10) wenigstens eine Aufnahmevorrichtung (13) mit einem Förderrotor (15) und einer Scheideinrichtung (16) und Abstreifern (16') umfasst.

6. Landwirtschaftliches Transportfahrzeug nach Anspruch 1, **dadurch gekennzeichnet, dass** die auswechselbare Einrichtung (19) im hinteren Bereich des Transportfahrzeugs angeordnet ist.

7. Landwirtschaftliches Transportfahrzeug nach Anspruch 6, **dadurch gekennzeichnet, dass** die auswechselbare Einrichtung (19) eine Streu- und Fräseinrichtung (21) umfasst.

8. Landwirtschaftliches Transportfahrzeug nach Anspruch 7, **dadurch gekennzeichnet, dass** die auswechselbare Einrichtung (19) Fräs- und Streuwalzen (23,24,25) aufweist.

9. Landwirtschaftliches Transportfahrzeug nach Anspruch 1, **dadurch gekennzeichnet, dass** die wenigstens eine auswechselbare Einrichtung (10 oder 19) Zentrierelemente (17, 26) zur lagegenauen Fixierung mit dem Transportfahrzeug aufweist.

10. Landwirtschaftliches Transportfahrzeug nach Anspruch 1 bis 9, **dadurch gekennzeichnet, dass** die Schnellwechselvorrichtung Aufnahmepunkte als Spann- und Befestigungselemente (18,18') zur Verbindung mit dem Transportfahrzeug (1) umfasst.

11. Landwirtschaftliches Transportfahrzeug nach Anspruch 1 bis 10, **dadurch gekennzeichnet, dass** die wenigstens eine auswechselbare Einrichtung (10,19) Kupplungsmittel zur Ankopplung an das Antriebssystem des Zugfahrzeugs (1) aufweist.

12. Landwirtschaftliches Transportfahrzeug nach Anspruch 11, **dadurch gekennzeichnet, dass** das Kupplungsmittel mechanische Kupplungselemente zur Energieübertragung umfasst.

13. Landwirtschaftliches Transportfahrzeug nach Anspruch 11, **dadurch gekennzeichnet, dass** das Kupplungsmittel hydraulische Kupplungselemente zur Energieübertragung umfasst.

14. Landwirtschaftliches Transportfahrzeug nach Anspruch 1 bis 13, **dadurch gekennzeichnet, dass** der Antrieb der auswechselbaren Einrichtungen (10,19) mit dem Antriebsmotor des Zugfahrzeugs in Antriebsverbindung steht.

15. Verfahren zur verschiedenartigen Nutzbarkeit eines landwirtschaftliches Transportfahrzeug nach einem oder mehreren der vorgenannten Ansprüche mit einer Kupplungseinrichtung zum Anschluss an ein Zugfahrzeug und zur Aufnahme von am Boden liegenden Erntegut mit wenigstens einem Förderaggregat zur Aufnahme von am Boden liegenden Erntegut und weiter stromaufwärts nachfolgenden Kratzboden, **dadurch gekennzeichnet, dass** das Transportfahrzeug (1) wenigstens eine auswechselbare Einrichtung (10 oder 19) als Fördereinrichtung (11,20) umfasst, welche mittels einer Schnellwechselvorrichtung mit dem Transportfahrzeug (1) koppel- oder entkoppelbar ist.

16. Verfahren nach Anspruch 15, **dadurch gekennzeichnet, dass** das Transportfahrzeug (1) eine vordere auswechselbare Einrichtung (10) und eine hintere auswechselbare Einrichtung (19) als Fördereinrichtungen (11,20) umfasst, welche mittels Schnellwechselvorrichtung mit dem Transportfahrzeug (1) koppel- oder entkoppelbar sind.

17. Verfahren nach Anspruch 16, **dadurch gekennzeichnet, dass** das Transportfahrzeug wahlweise folgendermaßen umgerüstet und benutzt werden kann:
- Transportfahrzeug (1) mit beiden auswechselbaren Ausrüstungen (10,19) nutzen zu können (d.h. mit Aufnahmeinrichtung (13) und Streu und Fräseinrichtung (21)).
- Transportfahrzeug mit nur vorderer auswechselbaren Ausrüstung (10) nutzen zu können (d.h. nur mit Aufnahmeeinrichtung (13) und gleichzeitigem Verzicht auf die Streu und Fräseinrichtung (21)). Transportfahrzeug mit nur hinteren auswechselbaren Ausrüstungen nutzen zu können (d.h. mit Verzicht der Aufnahmeeinrichtung (13) aber mit Streu und Fräseinrichtung (21)).
- Transportfahrzeug mit keiner der beiden auswechselbaren Ausrüstungen (10 und 19) nutzen zu können (d.h. Verzicht auf Aufnahmeeinrichtung (13) und Streu und Fräseinrichtung (21))
